# EUROPÄISCHE PATENTANMELDUNG

(11) **EP 4 625 758 A2**
(43) Veröffentlichungstag der Anmeldung: **01.10.2025**
(21) Anmeldenummer: 25166081.7
(22) Anmeldetag: 25.03.2025
(51) Int. Cl.: H02J 7/00, H01M 10/42

(54) **SCHALTUNG, VERFAHREN UND SYSTEM ZUR SYMMETRIERUNG DER SPANNUNG VON SPEICHEREINHEITEN**

(30) Priorität: 25.03.2024 DE 102024108492
(71) Anmelder: Torqeedo GmbH, 82234 Weßling (DE)
(72) Erfinder: Biebach, Jens, 82234 Wessling (DE)
(74) Vertreter: Nordmeyer, Philipp Werner

(57) **Zusammenfassung**

Die vorliegende Erfindung betrifft eine Schaltung, ein Verfahren und ein System zur Symmetrierung der Spannung von in Reihe geschalteten Speichereinheit (BT). Die Schaltung entspricht einem Leiternetzwerk, bei dem horizontalen Schalter (SH) die Sprossen der Leiter bilden, auf dem ersten Holm der Leiter zwischen den Sprossen jeweils eine Speichereinheit (BT) angeordnet ist und auf dem zweiten Holm zwischen den Sprossen jeweils ein vertikaler Schalter (SV) angeordnet ist. Durch Schalten der horizontalen Schalter (SH) und vertikalen Schalter (SV) können einzelne Speichereinheiten (BT) mit einer Symmetrierungsquelle (SY) verbunden werden, so dass diese die Spannung der verbundenen Speichereinheit (BT) anpasst, wodurch die Spannung der Speichereinheiten (BT) in der Reihenschaltung symmetriert wird.

## Beschreibung

### Technisches Gebiet

Die vorliegende Erfindung betrifft eine Schaltung, ein Verfahren und ein System zur Symmetrierung der Spannung von Speichereinheiten.

### Stand der Technik

Zum Betreiben eines elektrischen Bootsantriebs wird die elektrische Energie typischer Weise in elektrochemischen Batteriezellen gespeichert. Es ist bekannt, diese Batteriezellen in unterschiedlichen Konfigurationen miteinander zu kombinieren und zu verschalten, um sowohl die elektrischen Leistungsparameter wie gewünschte Klemmenspannung und Kapazität des Stromspeichers zu erreichen, als auch die baulichen Gegebenheiten über einen entsprechenden Formfaktor zu berücksichtigen. Weitere Parameter zur Gestaltung und Konstruktion des Stromspeichers betreffen auch die Umgebungsbedingungen wie beispielsweise die verfügbare Ladeinfrastruktur oder die üblichen Umgebungstemperaturen.

In der Batterietechnik werden verschiedene strukturelle Speichereinheiten unterschieden. Die Basiseinheit ist immer die Batteriezelle - hier werden zylindrische Zellen, prismatische Zellen und Pouchzellen voneinander unterschieden. Ein Batteriemodul kann eine Reihenschaltung und/oder Parallelschaltung von Batteriezellen sein, wobei ein Batteriemodul typischer Weise neben einer mechanischen Struktur und einer Kontaktierung der Batteriezellen auch eine Überwachungssensorik für die Batteriezellen umfasst. Eine Batterie kann eine Reihenschaltung und/oder eine Parallelschaltung von Batteriemodulen sein und neben einer mechanischen Struktur auch eine Temperierung und eine Kontaktierung umfassen. Eine Batteriebank kann mehrere Batterien umfassen, die in Reihe und/oder parallelgeschaltet sind.

Bei Batteriemodulen für den Marinebereich ist man im Allgemeinen darum bemüht, die Anzahl der Batteriezellen so zu wählen, dass einer charakteristischen Spannungshöhe im Bereich der Schutzkleinspannung entsprochen wird. Als Schutzkleinspannung wird diejenige Spannung bezeichnet, die so niedrig ist, dass der Anwender bei einer versehentlichen Berührung keinen elektrischen Schlag bekommt.

Bei der Verwendung von Lithium-lonenzellen bestehen typische Batteriemodule aus 6 Zellen für 24V Batterien beziehungsweise aus 12 Zellen für 48V Batterien. Bei der Verwendung von Lithium-Eisenphosphatzellen werden auf Grund der niedrigeren Zellspannung häufig 7 Zellen für 24V Batterien und 14 Zellen für 48V Batterien eingesetzt.

Die in einem Modul in Reihe geschalteten Batteriezellen werden vom gleichen Strom durchflossen. Da die Batteriezellen einer Streuung bezüglich Innenwiderstand und Kapazität unterliegen, kommt es trotz gleichem Stromfluss beim Laden und Entladen sowohl dynamisch (Strom größer oder kleiner als Null) und danach auch statisch (Strom gleich Null) zu unterschiedlichen Klemmenspannungen (Strom ungleich Null) und anschließend (Strom gleich Null) zu unterschiedlichen Leerlaufspannungen.

Wenn der Innenwiderstand der Batteriezellen eine Temperaturabhängigkeit zeigt, kann auch die unterschiedliche Erwärmung einzelner Batteriezellen zu einem unterschiedlichen Ladezustand dieser Batteriezellen beziehungsweise zu einer unterschiedlichen Batteriezellspannung führen.

Der Spannungsunterschied zwischen den Batteriezellen ist anhand der äußeren Spannung eines Batteriemoduls nicht erkennbar, da das Batteriemodul lediglich die gesamte Spannung aller miteinander verschalteter Batteriezellen abgibt. Der sichere und effiziente Betrieb eines Batteriemoduls erfordert daher einen Spannungsgleichlauf der Batteriezellen. Bei gesichertem Spannungsgleichlauf der Batteriezellen kann ein Batteriemodul bis zu dem Vielfachen der Batteriezellladeschlussspannung, welches der Anzahl der in Reihe geschalteten Batteriezellen entspricht, geladen oder dem gleichen Vielfachen der Batteriezellentladeschlussspannung entladen werden, ohne dass es zu einer Beschädigung der einzelnen Batteriezellen kommt.

Ist der Spannungsgleichlauf der Batteriezellen hingegen nicht sichergestellt, so können bei gleichbleibender Batteriemodulspannung einzelne Batteriezellen je nach Betriebsweise überladen oder tiefentladen werden, während sich andere Batteriezellen noch im zulässigen Spannungsbereich bewegen.

Die Gleichheit der Batteriezellenspannung im Rahmen einer zulässigen Toleranz muss zur Vorbeugung von Batteriezellenschäden mindestens überwacht werden. Diese Aufgabe wird typischerweise von einem in der jeweiligen Batterie vorgesehenen Batteriemanagementsystem, BMS, übernommen. Leistungsfähige BMS sorgen mit einer aktiven oder passiven Symmetrierung dafür, dass unterschiedliche Spannungen von Batteriezellen, die sich innerhalb eines Batteriemoduls in einer Reihenschaltung befinden, ausgeglichen werden. Allerdings ist dabei zu berücksichtigen, dass im Falle eines passiven Symmetrierens, beispielsweise mit der Parallelschaltung von Widerständen zu den Batteriezellen / der Batteriezelle, die über eine zu hohe Spannung verfügen, bauraumbedingt nur sehr kleine Entladeleistungen erreicht werden können und sich der Symmetrierungsvorgang somit über mehrere Tage hinziehen kann.

Eine aktive Symmetrierung, bei der durch die Verwendung von getakteten Schaltungen Energie von einzelnen Batteriezellen abgezogen und anderen Batteriezellen zugeführt werden kann, ist hingegen sehr kostenintensiv und bringt Baumraumnachteile mit sich.

Innerhalb einer Batterie wird das Angleichen der Zellspannungen im Normalfall modulübergreifend organisiert, so dass sich selbst bei Batteriespannungen von circa. 400V (Reihenschaltung 96 Zellen beziehungsweise von 8 Modulen mit je 12 Zellen) alle Batteriezellen innerhalb einer engen Toleranz der Zellspannung bewegen.

Für die Realisierung von Systemleistungen von mehreren 100kW ist eine Spannung von 400V jedoch nicht optimal. Angestrebt wird beispielsweise die Verdoppelung der Systemspannung, beispielsweise durch eine Reihenschaltung von zwei 400V-Batterien.

In diesem Falle ist eine Symmetrierung zwischen den Batteriezellen der verschiedenen Batterien durch die jeweiligen in den Batterien vorgesehenen internen BMS nicht möglich. Es besteht demnach ein Bedarf an einer Symmetrierung auf Systemebene beziehungsweise an einer universellen Schaltung zur Symmetrierung der Spannung von Speichereinheiten.

### Darstellung der Erfindung

Ausgehend von dem bekannten Stand der Technik ist es eine Aufgabe der vorliegenden Erfindung, verbesserte Schaltungen zur Symmetrierung der Spannung von Speichereinheiten, sowie ein entsprechendes Verfahren und ein entsprechendes System bereitzustellen.

Die Aufgabe wird durch eine Schaltung zur Symmetrierung der Spannungen von Speichereinheiten mit den Merkmalen des Anspruchs 1 gelöst. Vorteilhafte Weiterbildungen ergeben sich aus den Unteransprüchen, der Beschreibung und den Figuren.

Entsprechend wird eine Schaltung zur Symmetrierung der Spannung von Speichereinheiten vorgeschlagen, umfassend N Speichereinheiten BT(1), ..., BT(N), wobei N eine natürliche Zahl größer gleich 2 ist, wobei 1 <= i <= N, wobei jede Speichereinheit BT(i) einen ersten Pol und einen zweiten Pol aufweist. Die N Speichereinheiten sind in Reihe geschaltet, so dass der zweite Pol der i-ten Speichereinheit BT(i) mit dem ersten Pol der i+1-ten Speichereinheit BT(i+1) verbunden ist.

Die Schaltung umfasst ferner N+1 horizontale Schalter SH(1), ..., SH(N+1) und N vertikale Schalter SV(1), ..., SV(N). Der erste Pol der i-ten Speichereinheit BT(i) ist über einen ersten horizontalen Schalter SH(i) trennbar mit dem vertikalen Schalter SV(i) verbunden. Der zweite Pol der i-ten Speichereinheit BT(i) ist über einen zweiten horizontalen Schalter SH(i+1) trennbar mit dem vertikalen Schalter SV(i) verbunden. Der erste horizontale Schalter SH(i) ist mit dem zweiten horizontalen Schalter SH(i+1) über den vertikalen Schalter SV(i) trennbar verbunden.

Die Schaltung umfasst ferner eine Symmetrierungsquelle mit einem ersten Pol und einem zweiten Pol. Der erste Pol der Symmetrierungsquelle ist über den ersten horizontalen Schalter SH(1) mit dem ersten Pol der ersten Speichereinheit BT(1) trennbar verbunden. Der zweite Pol der Symmetrierungsquelle ist über den letzten horizontalen Schalter SH(N+1) mit dem zweiten Pol der letzten Speichereinheit BT(N) trennbar verbunden.

Die i-te Speichereinheit BT(i) wird durch Schließen der horizontalen Schalter SH(i) und SH(i+1), sowie durch Schließen aller vertikalen Schalter SV(1), ..., SV(i-1), SV(i+1), ..., SV(N) mit der Symmetrierungsquelle verbunden.

Dadurch wird die Spannung der i-ten Speichereinheit BT(i) angepasst, wodurch die Spannungen der Speichereinheiten BT(1), ..., BT(N) symmetriert werden.

Mit anderen Worten kann die hier vorgeschlagene Schaltung als eine Art Leiternetzwerk verstanden werden, bei denen die horizontalen Schalter die Sprossen der Leiter bilden und auf dem ersten Holm der Leiter zwischen den Sprossen jeweils eine Speichereinheit angeordnet ist und auf dem zweiten Holm zwischen den Sprossen jeweils ein vertikaler Schalter angeordnet ist.

Der erste Holm ist hierbei über den ersten Pol der ersten Speichereinheit und den letzten Pol der letzten Speichereinheit mit einem Verbraucher verbunden, beispielsweise einem Elektromotor oder einer Heizung. Da die Speichereinheiten in Reihe geschaltet sind, addieren sich die Spannungen der einzelnen Speichereinheiten.

Durch Betätigen der horizontalen Schalter können bestimmter Pole der Speichereinheiten mit dem gegenüberliegenden Holm der Leiter verbunden werden. Über die vertikalen Schalter können die bestimmten Pole der Speichereinheiten schließlich mit der Symmetrierungsquelle verbunden werden.

Beispielsweise kann mittels Reihenschaltung vierer 400Vdc Speichereinheiten ein 1600Vdc Netz erzeugt werden. Insbesondere für lokale Energiespeicher, die je nach Speicherbedarf eine unterschiedliche Anzahl an Speichereinheiten vorsieht, kann somit eine skalierbare Schaltung bereitgestellt werden, die die Spannungen der Speichereinheiten symmetriert.

In der genannten Erfindung können die ersten Pole die Pluspole und die zweiten Pole können die Minuspole der Speichereinheiten beziehungsweise der Symmetrierungsquelle sein.

Die Schalter SV(1), ..., SV(N), SH(1), ..., SH(N) können bidirektional sperrfähig sein.

Bidirektional sperrfähig ist ein Schalter, wenn er in ausgeschaltetem Zustand in beiden Richtung keinen Stromfluss ermöglicht.

Dadurch kann wirksam ein unerwünschter Stromfluss von der Symmetrierungsquelle zu den Speichereinheiten oder von den Speichereinheiten zur Symmetrierungsquelle unterdrückt werden.

Mindestens einer der Schalter SV(1), ..., SV(N), SH(1), ..., SH(N) kann ein mechanischer Schalter sein. In einem solchen Fall wird durch mechanische Trennung der Leiter auch eine bidirektionale Sperrfähigkeit gewährleistet.

Mindestens einer der Schalter SV(1), ..., SV(N), SH(1), ..., SH(N) kann eine antiserielle Anordnung von zwei Transistoren, insbesondere von MOSFET, sein.

Bei Leistungstransistoren entsteht bauartbedingt zwischen dem Source-Terminal und dem Drain-Terminal eine parasitäre Diode, die einen Stromfluss in Durchlassrichtung der parasitären Diode auch in ausgeschaltetem Zustand ermöglicht. Bei rückwärtsleitenden IGBT (Insulated-Gate Bipolar Transistor - Bipolartransistor) wird eine solche Diode zwischen Emitter-Terminal und Kollektor-Terminal als zusätzliche "Die" eingefügt. Werden zwei solcher Leistungstransistoren antiseriell miteinander verbunden, so weisen die Dioden auch antiparallele Durchlassrichtungen auf. In diesem Fall wird ein Stromfluss im ausgeschalteten Zustand wirksam unterdrückt. Durch gleichzeitiges beschalten des Gate-Terminals werden beide Transistoren gleichzeitig geschaltet, so dass ein Stromfluss ermöglicht wird.

Die oben gestellte Aufgabe wird weiterhin durch eine reduzierte Schaltung zur Symmetrierung der Spannung von Speichereinheiten mit den Merkmalen des Anspruchs 4 gelöst. Vorteilhafte Weiterbildungen des Verfahrens ergeben sich aus den Unteransprüchen sowie der vorliegenden Beschreibung und den Figuren.

Dementsprechend wird eine reduzierte Schaltung zur Symmetrierung der Spannung von Speichereinheiten vorgeschlagen, umfassend K erste Speichereinheiten BT(1,1), ..., BT(K,1) und K zweite Speichereinheiten BT(1,2), ..., BT(K,2). Hierbei gilt für alle j = 1, ..., K:
Jede der Speichereinheiten BT(j,1), BT(j,2) weist einen ersten Pol und einen zweiten Pol auf. Die erste Speichereinheit BT(j,1) und die zweite Speichereinheit BT(j,2) sind paarweise in Reihe geschaltet, so dass der zweite Pol der ersten Speichereinheit BT(j,1) mit dem ersten Pol der zweiten Speichereinheit BT(j,2) verbunden ist. Die paarweise in Reihe geschalteten Speichereinheiten BT(j,1), BT(j,2) bilden ein 2S-KP-Netzwerk.

Ferner umfasst die Schaltung K erste vertikale Schalter SV(1,1), ..., SV(K,1) und K zweite vertikale Schalter SV(1,2), ..., SV(K,2), sowie eine erste Diode und eine zweite Diode. Hierbei gilt für alle j = 1, ..., K:
Der erste Pol der ersten Speichereinheit BT(j,1) ist mit der Kathode der ersten Diode verbunden. Die Anode der ersten Diode ist über den ersten vertikalen Schalter SV(j,1) trennbar mit dem zweiten Pol der ersten Speichereinheit BT(j,1) verbunden. Der zweite Pol der zweiten Speichereinheiten BT(j,2) ist mit der Anode der zweiten Diode verbunden. Die Kathode der zweiten Diode ist über den zweiten vertikalen Schalter SV(j,2) trennbar mit dem ersten Pol der zweiten Speichereinheit BT(j,2) verbunden ist.

Ferner umfasst die Schaltung eine Symmetrierungsquelle mit einem ersten Pol und einem zweiten Pol, wobei der erste Pol der Symmetrierungsquelle mit der Anode der ersten Diode verbunden ist und wobei der zweite Pol der Symmetrierungsquelle mit der Kathode der zweiten Diode verbunden ist, wobei die ersten Pole die Pluspole und die zweiten Pole die Minuspole von Speichereinheiten und Symmetrierungsquelle sind.

Es gilt für alle j = 1, .... K, dass durch Schließen des ersten vertikalen Schalters SV(j,1) die zweite Speichereinheit BT(j,2) mit der Symmetrierungsquelle (SY) verbunden wird, oder durch Schließen des zweiten vertikalen Schalters SV(j,2) die erste Speichereinheit BT(j,1) mit der Symmetrierungsquelle (SY) verbunden wird. Dadurch wird die Spannung der zweiten Speichereinheit BT(j,2) oder der ersten Speichereinheit BT(j,1) angepasst, wodurch die Spannungen der Speichereinheiten symmetriert wird.

Für den Fall K=1 ergibt sich eine besonders einfach Schaltung, wobei sich die Indizes dann von BT(1,1) und BT(1,2) auf BT(1) und BT(2) reduzieren.

Im vorliegenden Fall wird die Stromrichtung durch die Anordnung der Dioden und der Symmetrierungsquelle vorgegeben. Insbesondere kann dadurch auf horizontale Schalter verzichtet werden. Eine Anpassung der Spannung der einzelnen Speichereinheiten erfolgt lediglich jeweils über einen einzigen vertikalen Schalter.

Die vertikalen Schalter der reduzierten Schaltung können unidirektional sperrfähig sein, wenn die Zellen BT(j,k) als Senken und die Symmetrierungsquelle als Quelle fungiert.

Durch die erste und zweite Diode ist nämlich die Stromrichtung in der Schaltung vorgegeben, so dass in der Folge die Schalter den Stromfluss lediglich in eine Richtung beschränken müssen. Dadurch kann die Schaltung wiederum vereinfacht werden.

Wenn die Symmetrierungsquelle als Senke arbeiten soll, müssen die vertikalen Schalter jedoch bidirektional sperrfähig sein.

Mindestens einer der vertikalen Schalter kann ein mechanischer Schalter sein. Die mechanischen Schalter sind bidirektional sperrfähig und sperren somit auch einen unidirektionalen Stromfluss zuverlässig.

Mindestens einer der vertikalen Schalter kann ein Transistor, insbesondere ein MOSFET, sein. MOSFETs sind unidirektional sperrfähig, ebenso wie IGBTs mit antiparalleler Diode, so dass in der reduzierten Schaltung ein einziger Transistor einen vertikalen Schalter ersetzen kann. Dadurch wird die reduzierte Schaltung vereinfacht und insbesondere auch mechanisch robust, da lediglich eine elektronische Schaltung der Schalter erfolgen kann.

Sowohl bei der allgemeinen Schaltung als auch bei der reduzierten Schaltung kann jede Speichereinheit eine Batterie sein oder ein Batteriemodul sein oder eine Batteriezelle sein.

Die Speichereinheiten können auf Eisenphosphat basieren oder Eisenphosphat enthalten. Die Speichereinheiten können auf Lithiumionen basieren oder Lithiumionen enthalten. Die Speichereinheiten können jedoch auch einen festen Elektrolyten umfassen.

Jede Speichereinheit kann eine Spannung von 400Vdc aufweisen. Insbesondere kann durch Verwendung von zwei 400Vdc Speichereinheiten ein 800Vdc System bereitgestellt werden.

Die Symmetrierungsquelle kann potentialfrei aus der Reihenschaltung der Speichereinheiten versorgt werden. Dadurch kann die gesamte Reihen- und Parallelschaltung beziehungsweise die ganze Batteriebank Energie für die Symmetrierungsquelle bereitstellen.

Die Symmetrierungsquelle kann aus einer der Speichereinheiten der Reihenschaltung gespeist werden oder aus einer externen Energiequelle, insbesondere aus dem Netz, gespeist wird. Beispielsweise kann die Symmetrierungsquelle aus der Speichereinheit mit der größten Spannung gespeist werden.

Die oben gestellte Aufgabe wird weiterhin durch ein Verfahren zur Symmetrierung der Spannung von Speichereinheiten mit den Merkmalen des Anspruchs 10 gelöst. Vorteilhafte Weiterbildungen des Verfahrens ergeben sich aus den Unteransprüchen sowie der vorliegenden Beschreibung und den Figuren.

Entsprechend wird ein Verfahren zur Symmetrierung der Spannung von Speichereinheiten vorgeschlagen. Das Verfahren bezieht sich hierbei auf eine der vorgenannten Schaltungen oder reduzierten Schaltungen. In einem ersten Verfahrensschritt wird durch ein Managementsystem mindestens eine anzupassende Speichereinheit bestimmt. In einem zweiten Verfahrensschritt wird die anzupassende Speichereinheit mit der Symmetrierungsquelle verbunden. Dadurch wird die Spannung der mindestens einen anzupassenden Speichereinheit angepasst, wodurch die Spannungen der Speichereinheiten symmetriert werden.

Das Managementsystem ist hierbei dazu eingerichtet, die Spannung der unterschiedlichen Speichereinheiten zu vermessen. Durch einen Vergleich der gemessenen Spannungen kann eine Speichereinheit bestimmt werden, deren Spannung angepasst werden muss. Das Managementsystem ist auch dazu eingerichtet die entsprechenden Schalter der Schaltung zu schalten, so dass die anzupassende Speichereinheit mit der Symmetrierungsquelle verbunden wird.

Die anzupassende Speichereinheit kann diejenige Speichereinheit mit der höchsten oder der niedrigsten Spannung sein.

Dadurch wird eine Symmetrierung der Spannungen erreicht, indem die Speichereinheiten mit den extremalen Spannungswerten angepasst werden. Dadurch wird insgesamt eine gleichmäßigere Spannungsverteilung und somit eine Symmetrierung der Spannungen erreicht.

Beispielsweise kann der zweite Verfahrensschritt auch darin bestehen, dass die Spannung der Speichereinheit mit der niedrigsten Spannung angepasst wird und anschließend die Spannung der Speichereinheit mit der höchsten Spannung angepasst wird, oder umgekehrt.

Das Spannungsniveau der Symmetrierungsquelle kann hierbei an die Spannung der anzupassenden Speichereinheit angepasst werden.

Beispielsweise kann die Spannung der Symmetrierungsquelle der Ladeschlussspannung der kleinsten zu symmetrierenden Einheit angepasst werden, also Batteriespannung oder Modulspannung oder Zellspannung. Das Verfahren ermöglicht dadurch, dass die Spannungssymmetrie bei jedem beliebigen Ladezustand der Reihenschaltung von Speichereinheiten eingestellt werden kann

Die Spannung der Speichereinheit kann über das CCCV-Verfahren angepasst werden.

Beim CCCV-Verfahren wird in einer ersten Phase die Spannung der Speichereinheit über einen konstanten Strom angepasst ("constant current", CC). In einer weiteren Phase wird die Spannung der Speichereinheit über eine konstante Spannung angepasst ("constant voltage", CV).

Die mindestens eine anzupassende Speichereinheit kann nach Beendigung der Symmetrierung der Spannungen der Speichereinheiten von der Symmetrierungsquelle getrennt werden. Dadurch wird die Anpassung der Spannung unterbrochen. Insbesondere kann die Änderung der Spannung ebenfalls durch das Managementsystem überwacht werden und somit die Sollspannung der Speichereinheit mit der Ist-Spannung vergleichen.

Die Symmetrierungsquelle kann eine Symmetrierungsstromregelungsvorrichtung aufweisen, die dazu eingerichtet ist, den Symmetrierungsstrom auf Null zu regeln, bevor einer der Schalter geöffnet wird. Dadurch wird ein Stromfluss unterbunden, bevor der Schalter geöffnet wird.

Die Symmetrierung der Spannungen der Speichereinheiten kann beispielsweise beendet werden, wenn der relative Spannungsunterschied der Speichereinheiten kleiner als 10% ist, insbesondere kleiner als 1% ist.

Der relative Spannungsunterschied kann insbesondere durch den Quotienten aus der größten Spannung und der kleinsten Spannung charakterisiert werden. Es ist aber auch möglich, dass der relative Spannungsunterschied in Abhängigkeit von der Median-Spannung oder der mittleren Spannung bestimmt wird.

Die oben gestellte Aufgabe wird weiterhin durch ein System zur Symmetrierung der Spannung von Speichereinheiten mit den Merkmalen des Anspruchs 15 gelöst. Vorteilhafte Weiterbildungen des Verfahrens ergeben sich aus den Unteransprüchen sowie der vorliegenden Beschreibung und den Figuren.

Entsprechend wird ein System zur Symmetrierung der Spannung von Speichereinheiten vorgeschlagen. Das System umfasst mindestens zwei Speichereinheiten, eine Symmetrierungsquelle und mindestens ein Managementsystem. Die Speichereinheiten sind in Reihe geschaltet sind, wobei die Speichereinheiten mit der Symmetriequelle trennbar verbunden sind. Erfindungsgemäß sind die Speichereinheiten mit einer der vorgenannten Schaltungen trennbar mit der Symmetrierungsquelle verbunden.

### Kurze Beschreibung der Figuren

Bevorzugte weitere Ausführungsformen der Erfindung werden durch die nachfolgende Beschreibung der Figuren näher erläutert. Dabei zeigen:
- Figuren 1A,: B eine Schaltdiagramm der erfindungsgemäßen Schaltung;
- Figur 2: ein Schaltdiagramm einer Anordnung von MOSFETS;
- Figur 3: ein Schaltdiagramm der erfindungsgemäßen reduzierten Schaltung in 2S-1P-Konfiguration;
- Figur 4: ein Schaltdiagramm der erfindungsgemäßen reduzierten Schaltung in 2S-KP-Konfiguration; und
- Figur 5: ein weiteres Schaltdiagramm der erfindungsgemäßen reduzierten Schaltung in 2S-KP-Konfiguration.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen und auf eine wiederholte Beschreibung dieser Elemente wird teilweise verzichtet, um Redundanzen zu vermeiden.

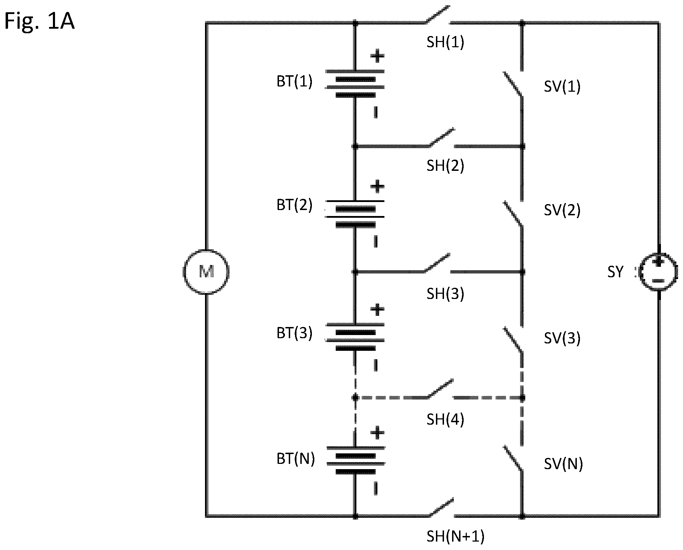

Figur 1A zeigt einen ersten Aspekt der vorgeschlagenen Schaltung. Gezeigt ist eine Ausführungsform der Schaltung zur Symmetrierung der Spannung von Speichereinheiten, hier in Form von Batterien BT(1) bis BT(N), wobei N größer gleich 2 ist. Jede der gezeigten Batterien BT(1) bis BT(N) weist einen ersten Pol und einen zweiten Pol auf, wobei beispielsweise der erste Pol der Pluspol (+) ist und der zweite Pol der Minuspol (-) ist.

Die Batterien BT(1), ..., BT(N) sind hier in Reihe geschaltet, so dass der zweite Pol, hier der Minuspol (-), der i-ten Batterie BT(i) mit dem ersten Pol, hier dem Pluspol (+), der i+1-ten Batterie BT(i+1) verbunden ist. Beispielsweise ist der Minuspol (-) der ersten Batterie BT1 mit dem Pluspol (+) der zweiten Batterie BT2 verbunden.

Die Reihenschaltung von Batterien BT(1), ..., BT(N), die gemeinsam eine Batteriebank beziehungsweise ein Batteriesystem ausbilden, kann beispielsweise an eine elektrische Maschine M angeschlossen sein. Anstatt der elektrischen Maschine M kann aber auch ein anderer Verbraucher, wie beispielsweise eine Heizung angeschlossen sein. Es kann anstatt eines Verbrauchers aber auch eine Quelle von Energie, wie beispielswiese ein Ladegerät angeschlossen sein.

Die nun vorgeschlagene Schaltung kann aber unabhängig von dem verbundenen Verbraucher betrieben werden.

Die Schaltung umfasst N+1 horizontale Schalter SH(1), ..., SH(N+1) und N vertikale Schalter SV(1), ..., SV(N). Der erste Pol der i-ten Batterie BT(i) kann über einen ersten horizontalen Schalter SH(i) trennbar mit dem vertikalen Schalter SV(i) verbunden werden. Der zweite Pol der i-ten Batterie BT(i) kann über einen zweiten horizontalen Schalter SH(i+1) trennbar mit dem vertikalen Schalter SV(i) verbunden werden. Der erste horizontale Schalter SH(i) kann mit dem zweiten horizontalen Schalter SH(i+1) über den vertikalen Schalter SV(i) trennbar miteinander verbunden werden.

Dadurch ergibt sich insgesamt eine leiterförmige Anordnung, bei der die Sprossen der Leiter die horizontalen Schalter SV(1), ..., SV(N+1) sind. Auf dem ersten Holm der Leiter finden sich zwischen den Sprossen die Batterien BT(1), ..., BT(N). Auf dem zweiten Holm der Leiter finden sich zwischen den Sprossen die vertikalen Schalter SV(1), ..., SV(N).

Um nun eine Symmetrierung der Batteriezellen der Batterien BT(1), ..., BT(N) zu erreichen, ist eine Symmetrierungsquelle SY vorgesehen. Der erste Pol der Symmetrierungsquelle SY ist über den ersten horizontalen Schalter SH(1) mit dem ersten Pol der ersten Speichereinheit BT(1) trennbar verbunden Der zweite Pol der Symmetrierungsquelle SY wird über den letzten horizontalen Schalter SH(N+1) mit dem zweiten Pol der N-ten Speichereinheit BT(N) trennbar verbunden.

Um eine bestimmte Batterie BT(i) zu laden oder zu entladen, wird die entsprechende Batterie BT(i) mit der Symmetrierungsquelle SY verbunden. Hierzu werden die horizontalen Schalter SH(i) und SH(i+1) geschlossen, sowie alle vertikalen Schalter SV(1), ..., SV(i-1), SV(i+1), ..., SV(N).

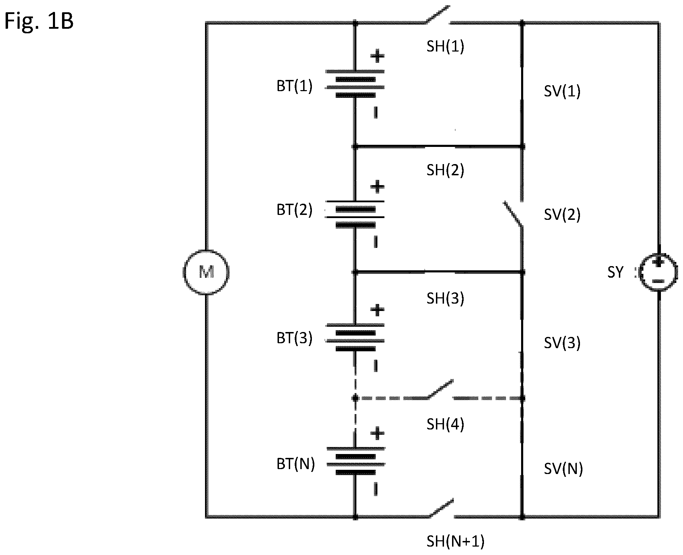

In Figur 1B ist exemplarisch dargestellt, wie die Batterie BT(2) geladen wird. Beispielsweise weist die Batterie BT(2) die größte oder die kleinste Spannung aller Batterien auf und muss dementsprechend geladen oder entladen werden, um die Spannung zu ändern und damit das Batteriesystem zu symmetrieren.

Um die Spannung der Speichereinheit BT(2) zu ändern müssen die angrenzenden horizontalen Schalter SH(2) und SH(3) geschlossen werden. Ebenso müssen die vertikalen Schalter SV(1), SV(3), ..., SV(N) geschlossen werden. Somit ist sichergestellt, dass der Strom aus der Symmetrierungsquelle SY ausschließlich durch die Batterie BT(2) fließt. Mit einem angepassten Spannungswert von SY, insbesondere einem höheren Spannungswert, lassen sich auch mehrere Batterien gleichzeitig nachladen oder entladen. So kann lediglich eine Batterie oder bis zu N Batterien gemeinsam nachgeladen oder entladen werden. Es können jedoch nur die Batterien gemeinsam nachgeladen werden, die elektrisch in unmittelbarer Reihenfolge direkt, also ohne Schalter, miteinander verbunden sind.

Verallgemeinernd kann man für eine Topologie gemäß der Figur 1A also sagen, dass zum Ändern der Spannung der i-ten Batterie BT(i) das Schließen der horizontalen Schalter SH(i) und SH(i+1) sowie aller vertikalen Schalter mit Ausnahme des Schalters SV(i) notwendig ist.

Sollen die Batterien BT einzeln sowohl geladen als auch entladen werden können, so ist es vorteilhaft, wenn alle horizontalen Schalter und vertikalen Schalter bidirektional sperrfähig sind. Beispielsweise ist ein mechanischer Schalter bidirektional sperrfähig.

Bei der Verwendung von Leistungshalbleitern statt mechanischer Schalter muss zur Gewährleistung der bidirektionalen Sperrfähigkeit unter Umständen eine antiserielle Schaltung von verwendet werden. Werden MOSFETs als Leistungshalbleiter verwendet, verfügen diese beispielsweise über eine parasitäre antiparallele Diode, so dass in Diodendurchlassrichtung keine Sperrfähigkeit gegeben ist. Die MOSFETs sind dementsprechend nicht bidirektional sperrfähig, sondern lediglich unidirektional sperrfähig.

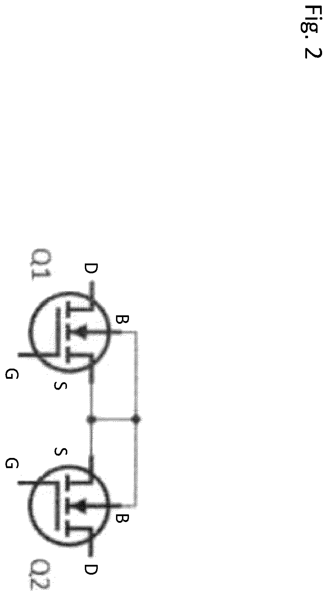

Figur 2 zeigt eine mögliche Ersatzschaltung eines bidirektional sperrfähigen Schalters, der auf einem ersten MOSFET Q1 und einem zweiten MOSFET Q2 basiert. Hierbei werden die Source-Terminals S sowie die Base-Terminals B der zwei MOSFETs miteinander verbunden. Dadurch wird verhindert, dass jeweils ein Strom im von dem Source-Terminal S zum Drain-Terminal D fließen kann. Ein Stromfluss kann somit ausschließlich realisiert werden, wenn das Gate-Terminal G mit Strom versorgt wird. Eine gleiche Wirkung hat eine Schaltung, bei der die Drains der MOSFETs miteinander verbunden sind und die Sources der MOSFETs die Anschlusspunkte für die angeschlossene Schaltung bilden.

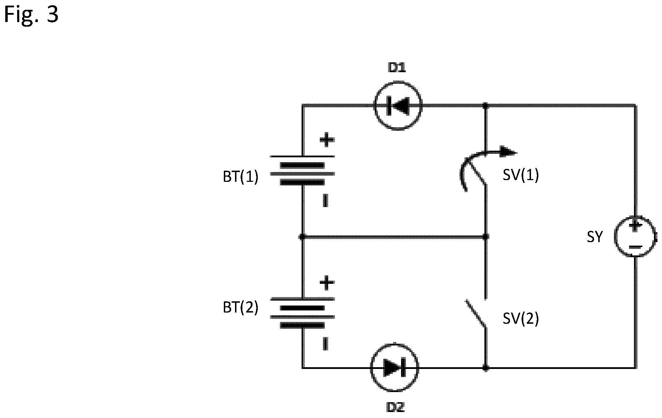

In Figur 3 ist eine Schaltung zur Symmetrierung der Spannung zweier Speichereinheiten BT1 und BT2 gezeigt. Die Schaltung ergibt sich aus der oben beschriebenen reduzierten Schaltung für den Fall K=1.

Wenn nämlich angenommen wird, dass nur die Spannung der Batterie mit der geringsten Energie angehoben werden soll, so kann die Schaltung der Figur 1 drastisch vereinfacht werden.

Die reduzierte Schaltung zur Symmetrierung der Spannung von Speichereinheiten umfasst eine erste Speichereinheit BT(1) und eine zweite Speichereinheit BT(2), wobei jede der beiden Speichereinheiten BT(1), BT(2) einen ersten Pol (+) und einen zweiten Pol (-) aufweist. Die erste Speichereinheit BT(1) und die zweite Speichereinheit BT(2) sind in Reihe geschaltet, so dass der zweite Pol der ersten Speichereinheit BT(1) mit dem ersten Pol der zweiten Speichereinheit BT(2) verbunden ist.

Ferner umfasst die reduzierte Schaltung einen ersten vertikalen Schalter SV(1) und einen zweiten vertikalen Schalter SV(2), sowie eine erste Diode D1 und eine zweite Diode D2.

Der erste Pol der ersten Speichereinheit BT(1) ist mit der Kathode der ersten Diode D1 verbunden, wobei die Anode der erste Diode D1 über den ersten vertikalen Schalter SV(1) trennbar mit dem zweiten Pol der ersten Speichereinheit BT(1) verbunden ist.

Der zweite Pol der zweiten Speichereinheit BT(2) ist mit der Anode der zweiten Diode D2 verbunden ist, wobei die Kathode der zweiten Diode D2 über den zweiten vertikalen Schalter SV(2) trennbar mit dem ersten Pol der zweiten Batterie BT(2) verbunden ist.

Der erste Pol der Symmetrierungsquelle SY ist mit der Anode der ersten Diode D1 verbunden und der zweite Pol der Symmetrierungsquelle SY ist mit der Kathode der zweiten Diode D2 verbunden. Die ersten Pole sind hierbei die Pluspole und die zweiten Pole die Minuspole der Batterien BT und der Symmetrierungsquelle SY.

Zunächst können also im Vergleich zur Figur 1 die horizontalen Schalter SH(1) und SH(N+1) in den äußersten Sprossen der Leiterschaltung durch eine erste Diode D1 und eine zweite Diode D2 ersetzt werden. Wenn nur unidirektional sperrende vertikale Schalter implementiert sind, ist die Schaltung darauf beschränkt, eine oder mehrere der Batterien durch die Symmetrierungsquelle SY zu laden. Eine Entladung einer oder mehrerer Batterien durch die Symmetrierungsquelle SY ist auf diese Weise nicht möglich.

Die erste Diode D1 und die zweite Diode D2 sind hierbei in Durchlassrichtung zur Symmetrierungsquelle SY angeordnet. Gleichzeitig ist die erste Diode D1 in Sperrrichtung zur ersten Batterie BT(1) und die zweite Diode D2 in Sperrrichtung zur zweiten Batterie BT(2) angeordnet.

Durch den Ersatz von Schaltern durch Dioden kann der Ansteueraufwand der Schaltung reduziert werden.

Da lediglich zwei Batterien verbaut werden und die Stromrichtung der Symmetrierungsquelle SY vorgegeben ist, ist im Vergleich zur Figur 1 ein vollständiger Verzicht auf horizontale Schalter SH möglich.

Figur 3 zeigt weiter schematisch das Nachladen der Batterie BT(2), welches durch Schließen des Schalters SV(1) erreicht werden kann. Soll die Batterie BT1 nachgeladen werden, muss SV(1) geöffnet und SV(2) geschlossen werden.

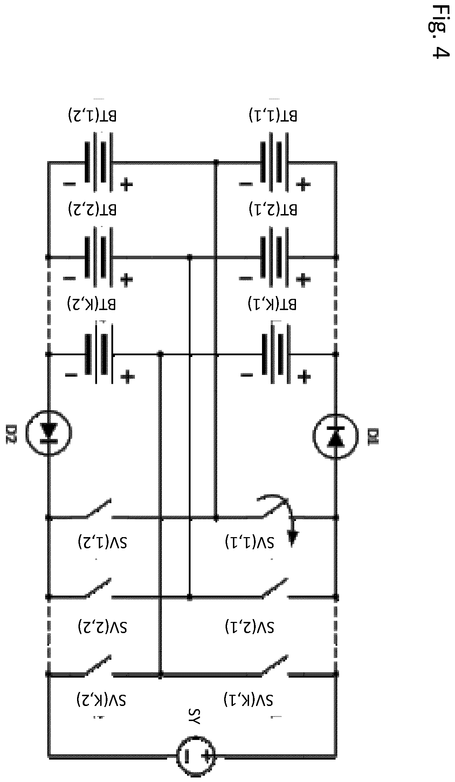

Figur 4 zeigt den allgemeinen Fall der reduzierten Schaltung für eine 2S-KP-Konfiguration. Die reduzierte Schaltung zur Symmetrierung der Spannung von Batterien BT umfasst K erste Batterien BT(1,1), ..., BT(K,1) und K zweite Batterien BT(1,2), ..., BT(K,2). Für alle j = 1, ..., K gilt, dass jede der Batterien BT(j,1), BT(j,2) einen ersten Pol und einen zweiten Pol aufweist. Die erste Batterie BT(j,1) und die zweite Batterie BT(j,2) sind paarweise in Reihe geschaltet, so dass der zweite Pol der ersten Batterie BT(j,1) mit dem ersten Pol der zweiten Batterie BT(j,2) verbunden ist. Die paarweise in Reihe geschalteten Batterien BT bilden ein 2S-KP-Netzwerk.

Ferner umfasst die Schaltung K erste vertikale Schalter SV(1,1), ..., SV(K,1) und K zweite vertikale Schalter SV(1,2), ..., SV(K,2), sowie eine erste Diode D1 und eine zweite Diode D2. Hierbei gilt für alle j = 1, ..., K, dass der erste Pol der ersten Batterie BT(j,1) mit der Kathode der ersten Diode verbunden ist. Die Anode der ersten Diode ist über den ersten vertikalen Schalter SV(j,1) trennbar mit dem zweiten Pol der ersten Batterie BT(j,1) verbunden. Der zweite Pol der zweiten Batterie BT(j,2) ist mit der Anode der zweiten Diode verbunden. Die Kathode der zweiten Diode ist über den zweiten vertikalen Schalter SV(j,2) trennbar mit dem ersten Pol der zweiten Batterie BT(j,2) verbunden.

Ferner umfasst die Schaltung eine Symmetrierungsquelle SY mit einem ersten Pol und einem zweiten Pol, wobei der erste Pol der Symmetrierungsquelle SY mit der Anode der ersten Diode verbunden ist und wobei der zweite Pol der Symmetrierungsquelle SY mit der Kathode der zweiten Diode verbunden ist, wobei die ersten Pole die Pluspole und die zweiten Pole die Minuspole von Speichereinheiten und Symmetrierungsquelle SY sind.

Für alle j = 1, .... K gilt, dass durch Schließen des ersten vertikalen Schalters SV(j,1) die zweite Batterie BT(j,2) mit der Symmetrierungsquelle (SY) verbunden wird, oder durch Schließen des zweiten vertikalen Schalters SV(j,2) die erste Batterie BT(j,1) mit der Symmetrierungsquelle SY verbunden wird. Dadurch wird die Spannung der zweiten Batterie BT(j,2) oder der ersten Batterie BT(j,1) angepasst, wodurch die Spannungen der Batterien BT symmetriert wird.

Es können mit einer Symmetrierungsquelle SY und zwei Dioden D1, D2 K-zweistufige Batteriestränge mit einer dazugehörenden Schalterhalbbrücke verwaltet werden.

Hierzu werden die K zweistufigen Batteriestränge BT(j,1), BT(j,2) parallelgeschaltet. Gleichermaßen werden die zugehörigen Stränge von in Reihe geschalteten vertikalen Schaltern SV(j,1), SV(j,2) parallelgeschaltet. Die parallelgeschalteten Batteriestränge und vertikalen Schalterstränge sind schließlich mit der ersten und der zweiten Diode und der Symmetrierungsquelle SY in der oben beschriebenen Art und Weise verbunden.

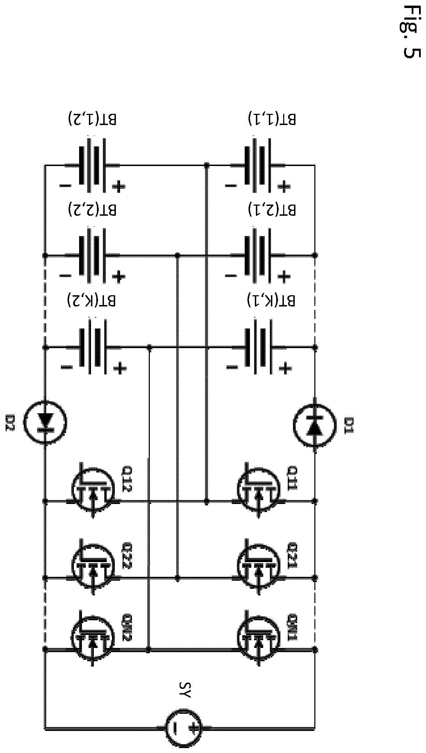

Figur 5 zeigt eine Ersatzschaltung, wenn die Schalter der Schaltung der Figur 4 durch unidirektional sperrfähige Schalter Q ersetzt werden. Da die Schalter den Strom in nur einer Richtung sperren müssen ist es möglich, jeden Schalter, der unidirektional Spannung blockieren kann, einzusetzen. Es können z.B. MOSFET als Ersatz der Schalter zum Einsatz kommen.

Mit den gezeigten Schaltungen kann ein Verfahren zur Symmetrierung durchgeführt werden (nicht gezeigt). Hierbei kann ein Managementsystem dazu eingerichtet sein die Spannung der einzelnen Batterien zu messen und die anzupassende Batterie zu bestimmen. Die anzupassende Batterie kann durch Ansteuerung der Schalter durch das Managementsystem schließlich mit der Symmetrierungsquelle SY verbunden werden, so dass die Spannung der anzupassenden Batterie angepasst werden kann. Wenn die Spannung der anzupassenden Batterie in einem vorher festgelegten Toleranzrahmen liegt, kann die anzupassende Batterie von der Symmetrierungsquelle SY getrennt werden. Nach dem Anpassen der Spannung ist beispielsweise die Differenz der Batterie mit der höchsten Spannung und der Differenz der Batterie mit der geringsten Spannung kleiner. Dadurch wurden die Spannungen der Batterien symmetriert.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- BT: Speichereinheit
- D: Diode
- Q: MOSFET / Leistungstransistor
- SY: Symmetrierungsquelle
- SH: horizontaler Schalter
- SV: vertikaler Schalter

## Patentansprüche

1. Schaltung zur Symmetrierung der Spannung von Speichereinheiten,
umfassend N Speichereinheiten BT(1), ..., BT(N),
wobei N größer gleich 2 ist,
wobei jede Speichereinheit BT(i) einen ersten Pol und einen zweiten Pol aufweist,
wobei die N Speichereinheiten in Reihe geschaltet sind, so dass der zweite Pol der i-ten Speichereinheit BT(i) mit dem ersten Pol der i+1-ten Speichereinheit BT(I+1) verbunden ist,
ferner umfassend N+1 horizontale Schalter SH(1), ..., SH(N+1) und N vertikale Schalter SV(1), ..., SV(N),
wobei der erste Pol der i-ten Speichereinheit BT(i) über einen ersten horizontalen Schalter SH(i) trennbar mit dem vertikalen Schalter SV(i) verbunden ist,
wobei der zweite Pol der i-ten Speichereinheit BT(i) über einen zweiten horizontalen Schalter SH(i+1) trennbar mit dem vertikalen Schalter SV(i) verbunden ist,
wobei der erste horizontale Schalter SH(i) mit dem zweiten horizontalen Schalter SH(i+1) über den vertikalen Schalter SV(i) trennbar miteinander verbunden ist,
ferner umfassend eine Symmetrierungsquelle (SY) mit einem ersten Pol und einem zweiten Pol,
wobei der erste Pol der Symmetrierungsquelle (SY) über den ersten horizontalen Schalter SH(1) mit dem ersten Pol der ersten Speichereinheit BT(1) trennbar verbunden ist,
wobei der zweite Pol der Symmetrierungsquelle (SY) über den letzten horizontalen Schalter SH(N+1) mit dem zweiten Pol der N-ten Speichereinheit BT(N) trennbar verbunden ist, wobei
die i-te Speichereinheit BT(i) durch Schließen der horizontalen Schalter SH(i) und SH(i+1), sowie durch Schließen aller vertikalen Schalter SV(1) bis SV(i-1) sowie SV(i+1) bis SV(N) mit der Symmetrierungsquelle (SY) verbunden wird,
wodurch die Spannung der i-ten Speichereinheit BT(i) angepasst wird, wodurch die Spannungen der Speichereinheiten BT(1), ..., BT(N) symmetriert wird.

2. Schaltung nach Anspruch 1, **dadurch gekennzeichnet, dass** die Schalter SV(1), ..., SV(N), SH(1), ..., SH(N) bidirektional sperrfähig sind.

3. Schaltung nach Anspruch 1 oder 2, **dadurch gekennzeichnet, dass**
mindestens ein Schalter SV(1), ..., SV(N), SH(1), ..., SH(N) ein mechanischer Schalter ist oder
mindestens ein Schalter SV(1), ..., SV(N), SH(1), ..., SH(N) eine antiserielle Anordnung von zwei Transistoren, insbesondere von MOSFET, ist.

4. Schaltung zur Symmetrierung der Spannung von Speichereinheiten (BT),
umfassend K erste Speichereinheiten BT(1,1), ..., BT(K,1) und K zweite Speichereinheiten BT(1,2), ..., BT(K,2), wobei für alle j = 1, ..., K gilt:
jede erste Speichereinheit BT(j,1) und jede zweite Speichereinheit BT(j,2) weist einen ersten Pol und einen zweiten Pol auf,
die erste Speichereinheit BT(j,1) und die zweite Speichereinheit BT(j,2) sind paarweise in Reihe geschaltet, so dass der zweite Pol der ersten Speichereinheit BT(j,1) mit dem ersten Pol der zweiten Speichereinheit BT(j,2) verbunden ist,
wobei die paarweise in Reihe geschalteten Speichereinheiten BT(j,1), BT(j,2) ein 2S-KP-Netzwerk bilden,
ferner umfassend K erste vertikale Schalter SV(1,1), ..., SV(K,1) und K zweite vertikale Schalter SV(1,2), ..., SV(K,2), sowie eine erste Diode (D1) und eine zweite Diode (D2), wobei für alle j = 1, ..., K gilt:
der erste Pol der ersten Speichereinheit BT(j,1) ist mit der Kathode der ersten Diode (D1) verbunden,
die Anode der erste Diode (D1) ist über den ersten vertikalen Schalter SV(j,1) trennbar mit dem zweiten Pol der ersten Speichereinheit BT(j,1) verbunden,
der zweite Pol der zweiten Speichereinheiten BT(j,2) ist mit der Anode der zweiten Diode (D2) verbunden,
die Kathode der zweiten Diode (D2) ist über den zweiten vertikalen Schalter SV(j,2) trennbar mit dem ersten Pol der zweiten Speichereinheit BT(j,2) verbunden,
ferner umfassend eine Symmetrierungsquelle (SY) mit einem ersten Pol und einem zweiten Pol,
wobei der erste Pol der Symmetrierungsquelle (SY) mit der Anode der ersten Diode (D1) verbunden ist und
wobei der zweite Pol der Symmetrierungsquelle (SY) mit der Kathode der zweiten Diode (D2) verbunden ist,
wobei die ersten Pole die Pluspole und die zweiten Pole die Minuspole von Speichereinheiten (BT) und Symmetrierungsquelle (SY) sind, wobei
für alle j = 1, .... K gilt:
durch Schließen des ersten vertikalen Schalters SV(j,1) wird die zweite Speichereinheit BT(j,2) mit der Symmetrierungsquelle (SY) verbunden, oder
durch Schließen des zweiten vertikalen Schalters SV(j,2) wird die erste Speichereinheit BT(j,1) mit der Symmetrierungsquelle (SY) verbunden,
wodurch die Spannung der zweiten Speichereinheit BT(j,2) oder der ersten Speichereinheit BT(j,1) angepasst wird,
wodurch die Spannungen der Speichereinheiten (BT) symmetriert wird.

5. Schaltung nach Anspruch 4, **dadurch gekennzeichnet, dass** die vertikalen Schalter (SV) mindestens unidirektional sperrfähig sind.

6. Schaltung nach Anspruch 4 oder 5, **dadurch gekennzeichnet, dass** mindestens einer der vertikalen Schalter (SV) ein mechanischer Schalter ist oder
mindestens einer der vertikalen Schalter (SV) ein Transistor, insbesondere ein MOSFET, ist.

7. Schaltung nach einem der vorherigen Ansprüche, **dadurch gekennzeichnet, dass** jede Speichereinheit (BT) eine Batterie ist oder ein Batteriemodul ist oder eine Batteriezelle ist, und/oder
dass die Speichereinheit (BT) auf Eisenphosphat basiert oder Eisenphosphat enthält oder auf einem festen Elektrolyten basiert.

8. Schaltung nach einem der vorherigen Ansprüche, **dadurch gekennzeichnet, dass** jede Speichereinheit (BT) eine Spannung von 400Vdc aufweist.

9. Schaltung nach einem der vorherigen Ansprüche, **dadurch gekennzeichnet, dass** die Symmetrierungsquelle (SY) potentialfrei aus der Reihenschaltung der Speichereinheiten (BT) versorgt wird oder
die Symmetrierungsquelle (SY) aus einer der Speichereinheiten (BT) der Reihenschaltung gespeist wird oder aus einer externen Energiequelle, insbesondere aus dem Netz, gespeist wird.

10. Schaltung nach einem der vorherigen Ansprüche, **dadurch gekennzeichnet, dass** die Symmetrierungsquelle (SY) eine Symmetrierungsstromregelungsvorrichtung umfasst, die dazu eingerichtet ist, den Symmetrierungsstrom auf Null zu regeln, bevor einer der Schalter geöffnet wird.

11. Verfahren zur Symmetrierung der Spannung von Speichereinheiten (BT) mit einer Schaltung nach einem der Ansprüche 1 bis 3 oder mit einer Schaltung nach einem der Ansprüche 4 bis 6,
wobei in einem ersten Schritt mindestens eine anzupassende Speichereinheit (BT') mit einem Managementsystem bestimmt wird,
wobei in einem zweiten Schritt die mindestens eine anzupassende Speichereinheit (BT') mit der Symmetrierungsquelle (SY) verbunden wird, wodurch die Spannung der mindestens einen anzupassenden Speichereinheit (BT') angepasst wird, wodurch die Spannungen der Speichereinheiten (BT) symmetriert werden.

12. Verfahren nach Anspruch 11, **dadurch gekennzeichnet, dass** das Spannungsniveau der Symmetrierungsquelle (SY) an die Spannung der anzupassenden Speichereinheit (BT') angepasst wird, und/oder
dass die anzupassende Speichereinheit (BT') diejenige mit der höchsten oder der niedrigsten Spannung ist, und/oder dass die Spannung der anzupassenden Speichereinheit (BT') über das CCCV-Verfahren angepasst wird, und/oder
dass bis zu N Speichereinheiten (BT) gemeinsam nachgeladen werden, wobei die Speichereinheiten (BT) in elektrisch unmittelbarer Reihenfolge direkt miteinander verbunden sind.

13. Verfahren nach einem der Ansprüche 11 oder 12, **dadurch gekennzeichnet, dass** die mindestens eine anzupassende Speichereinheit (BT') nach Beendigung der Symmetrierung der Spannungen der Speichereinheiten von der Symmetrierungsquelle (SY) getrennt wird.

14. Verfahren nach Anspruch 13, **dadurch gekennzeichnet, dass** die Symmetrierung der Spannungen der Speichereinheiten (BT) beendet ist, wenn der relative Spannungsunterschied der Speichereinheiten (BT) kleiner als 10%, insbesondere kleiner als 1% ist.

15. System zur Symmetrierung der Spannung von Speichereinheiten (BT) umfassend mindestens zwei Speichereinheiten (BT), eine Symmetrierungsquelle (SY) und mindestens ein Managementsystem,
wobei die Speichereinheiten (BT) mit der Symmetrierungsquelle (SY) mittels einer Schaltung nach einem der Ansprüche 1 bis 10 trennbar verbunden sind,
wobei das Managementsystem dazu eingerichtet ist, die Spannung der einzelnen Speichereinheiten (BT) zu bestimmen,
wobei das Managementsystem dazu eingerichtet ist die anzupassende Speichereinheit (BT') mit der Symmetrierungsquelle (SY) zu verbinden.
